# EUROPÄISCHE PATENTSCHRIFT

(11) **EP 1 302 290 B1**
(45) Veröffentlichungstag und Bekanntmachung des Hinweises auf die Patenterteilung: **02.07.2008**
(21) Anmeldenummer: 02020275.0
(22) Anmeldetag: 11.09.2002
(51) Int. Cl.: B28D 1/14, B23B 51/02, E21B 10/58

(54) **Bohrwerkzeug**
Drilling tool
Outil de forage

(30) Priorität: 12.10.2001 DE 10150287; 28.02.2002 DE 10208630
(43) Veröffentlichungstag der Anmeldung: 16.04.2003
(73) Patentinhaber: ROBERT BOSCH GMBH, 70442 Stuttgart (DE)
(72) Erfinder: Moser, Bernhard, 88361 Altshausen (DE); Widmann, Rainer, 88085 Langenargen (DE); Lang, Marco dr., 88213 Ravensburg (DE)
(74) Vertreter: Eisele, Otten, Roth & Dobler

(56) Entgegenhaltungen:
- DE-A- 3 123 048
- DE-A- 4 012 772
- DE-A- 10 009 732
- DE-A- 10 038 039
- FR-A- 2 540 424
- US-A- 4 330 229
- US-A- 5 836 410
- US-A- 6 044 919

## Beschreibung

Die Erfindung betrifft ein Bohrwerkzeug nach dem Oberbegriff des Anspruchs 1.

Herkömmliche Bohrwerkzeuge und insbesondere Gesteinsbohrer bestehen aus einem Bohrerschaft mit einem Einspannende sowie einem Bohrerkopf, welcher in Seitenansicht ein giebelförmiges Schneidelement aufweist, das vorzugsweise als Hartmetallplatte ausgeführt ist (siehe z.B. Figur 1 der EP 0 452 255 B1).

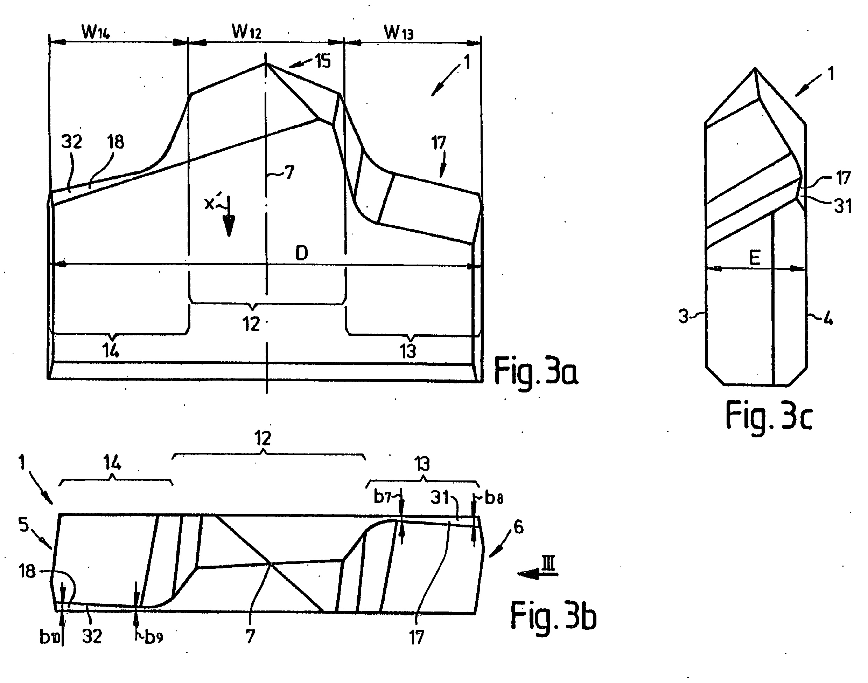

Aus der DE 100 38 039 A1 ist ein derartiges Bohrwerkzeug bekannt. Dieses besitzt als Schneidelement eine Platte aus Hartmetall, welche einen radial innen liegenden Zentrierabschnitt und außen liegende Abschnitte aufweist, welche gegenüber dem radial innen liegenden Zentrierabschnitt abgesetzt sind. Ausgehend von einer zentrischen Querschneide (siehe Figur 3c, Bezugszeichen 40) weisen die beiden Schneiden der Schneidplatte jeweils eine durchgehende Spanfläche und eine über einen Absatz stufenförmig verlaufende Freifläche auf.

Weiterhin ist aus der DE 44 42 266 A1 eine Schneidplatte aus Hartmetall bekannt, welche ausgehend von einer Querschneide zwei Schneiden aufweist, welche jeweils durch eine Spanfläche und eine Freifläche gebildet sind und jeweils in einem von der Mittellängsachse entfernten Bereich eine Unterbrechung durch eine Abstufung aufweisen, die durch eine Dehnfuge gebildet ist.

Aus der US 6,102,634 ist ebenfalls eine Schneidplatte für ein Bohrwerkzeug bekannt. Diese weist zwei Schneiden auf, welche ausgehend von einer Querschneide verlaufen und in einem zentrischen, der Bohrerlängsachse nahen Bereich, durch jeweils eine Spanfläche und eine Freifläche gebildet sind. In einem radial außen liegenden, der Bohrerlängsachse fernen Bereich sind die Schneiden jeweils unter Vermeidung der Ausbildung einer Spanfläche allein durch jeweils eine Schneidkante mit dahinter liegender Freifläche gebildet. In Draufsicht sind dabei die Schneidkanten durch Seitenkanten der Schneidplatte gebildet.

Aus dem Dokument DE-A-4012772 ist ein Bohrwerkzeug mit einer Kreuzplatte bekannt worden. Um eine verbesserte Zentrierung zu erreichen, weist die Spitze der Kreuzplatte eine Zentrierspitze auf, die ohne Querschneidenanordnung ausgebildet ist.

Der Erfindung liegt die Aufgabe zugrunde, ein Bohrwerkzeug und insbesondere eine Schneidplatte für ein Bohrwerkzeug vorzuschlagen, bei welchem durch eine Optimierung der Geometrie der Schneiden eine verbesserte Abtragsleistung und eine erhöhte Standfestigkeit erzielt wird.

Diese Aufgabe wird ausgehend von einem Bohrwerkzeug nach dem Oberbegriff des Anspruchs 1 durch die kennzeichnenden Merkmale des Anspruchs 1 gelöst. In den Unteransprüchen sind vorteilhafte und zweckmäßige Weiterbildungen des im Anspruch 1 beschriebenen Werkzeugs angegeben.

Der Erfindung liegt die Erkenntnis zugrunde, dass die Schneidplatte so gestaltet ist, dass die Bohr- bzw. Schneidwirkung der Schneiden mit zunehmendem Abstand von der Mittellängsachse des Werkzeugs kontinuierlich bzw. abschnittsweise zunimmt, um ein optimales Schneiden zu gewährleisten, und dass es andererseits erforderlich ist, dass die Meißel- bzw. Schlagwirkung der Schneiden zur Mittellängsachse des Werkzeugs hin zunimmt, um eine optimale Schlagleistung zu erzielen. Dies bedeutet, dass in jedem Bereich der Schneide ein Zielkonflikt zwischen der Schlagfähigkeit und der Schneidfähigkeit der Schneiden besteht. Somit dürfen die Schneiden in jedem Bereich eine Spezialisierung aufweisen, aber nicht einseitig auf das Schneiden oder Schlagen ausgelegt sein. Vielmehr muss das Werkzeug im radial außen liegenden Bereich der Schneiden auch für einen schlagenden Einsatz und im radial innen liegenden Bereich der Schneiden auch für einen schneidenden Einsatz geeignet sein. Erfindungsgemäß ist eine derartige Optimierung des Werkzeugs durch eine Ausbildung einer pyramidenförmigen Spitze im zentrischen Bereich des Werkzeugs verwirklicht. Vorteilhaft an einer derartigen Formgebung bzw. Schneidengeometrie ist ein Verlauf der Schneidkanten bis zur oder bis annähernd zur Werkzeuglängsachse und somit das Erhalten einer optimalen Schneidwirkung des Werkzeugs bis in den Bereich der Werkzeuglängsachse. Erfindungsgemäß ist die geforderte Optimierung des Werkzeugs im Außenbereich durch eine Ausbildung der Schneidkanten als Fasen bewirkt. Durch die fasenartige Ausbildung der in den beiden Außenbereichen verlaufenden Schneidkanten ist eine Stabilisierung der Schneidkanten erreicht. Diese erlaubt trotz optimaler Anpassung der Schneiden auf die Bohrwirkung bzw. Schneidwirkung auch einen wirkungsvollen Schlageinsatz der Schneidkanten. Somit ist der zentrische Bereich optimal auf das dort hauptsächlich stattfindende Meißeln bzw. Schlagen ausgebildet, ohne gegebenenfalls erforderliche Schneideigenschaften zu verlieren. Auch die Optimierung der Außenbereiche auf das Bohren bzw. Schneiden ist vorgenommen, und ein schlagender Einsatz der Außenbereiche ist so gewährleistet, dass es zu keinem frühzeitigen Verschleiß oder Bruch der Schneidkanten kommt. Das heißt, die Ausführung der Schneidkante als Fase bewirkt eine Stabilisierung derselben für den Einsatz als Bohrwerkzeug. Zur Stabilisierung der Schneidkanten bzw. zur Vermeidung von Ausbrüchen derselben wird-demzufolge eine Brechung der scharfen Schneidkanten durch Anbringung einer ebenen Fase oder einer abgerundeten Fase (Abrundung) entlang der Schneidkante erzeugt. Unter einer eben bzw. flach verlaufenden Fase ist eine Außenkante oder Innenkante zu verstehen, welche eine flache bzw. ebene Bruchfläche bzw. Kantenfläche aufweist. Eine Außenkante oder Innenkante, welche in einem langgestreckten, einer Linie nahen Bereich eine Rundung aufweist, ist im Sinne der Erfindung als abgerundete Fase zu verstehen. Durch die flache Anfasung bzw. Brechung oder Abrundung eines einer Linie nahen Bereichs entsteht eine schmale Wirkfläche mit den Eigenschaften einer Schneidkante.

Gemäß einer vorteilhaften Ausbildung des Erfindungsgegenstandes weist die im Außenbereich die Schneidkante bildende Fase in Richtung des Verlaufs der Werkzeuglängsachse gesehen (Draufsicht auf Bohrwerkzeug), eine messbare Breite auf. Durch diese erfolgt eine Verstärkung der Schneidkante ohne Ausbildung einer sonst üblichen negativen Spanfläche. Erfindungsgemäß ist für Bohrwerkzeuge mit einem Wirkdurchmesser von bis zu 25 mm eine Fasenbreite von bis zu 0,5 mm, vorzugsweise 0,1 mm bis 0,5 mm, vorgesehen. Werkzeuge mit einem Wirkdurchmesser von 25 mm bis 50 mm sind erfindungsgemäß mit einer Fase versehen, welche eine Breite von bis zu 1 mm aufweist, vorzugsweise sind hier Breiten von 0,5 mm bis 1 mm vorgesehen. Für Bohrwerkzeuge mit einem Wirkdurchmesser von über 50 mm sieht die Erfindung Fasenbreiten von bis zu 2 mm vor, wobei vorzugsweise Fasenbreiten von 1 mm bis 2 mm zum Einsatz kommen. Die erfindungsgemäß durch eine flache oder abgerundete Fase ausgebildete Schneidkante weist somit hinsichtlich der Breite eine Abhängigkeit vom Wirkdurchmesser des Bohrwerkzeugs auf.

Weiterhin sieht die Erfindung vor, der Fase einen im Querschnitt ebenen und/oder konkaven und/oder konvexen und/oder einem Polygonzug folgenden Verlauf zu geben. Dies ermöglicht es, nicht nur durch die Breite der Wirkfläche, sondern auch durch deren Formgebung eine auf das Werkzeug und das Werkstück abgestimmte Feinabstimmung der Stabilität und der Eigenschaften der durch die Fase gebildeten Schneidkante vorzunehmen.

Gemäß einer besonderen Ausführung des Erfindungsgegenstandes ist es vorgesehen, den zentrischen Bereich und die Außenbereiche mit unterschiedlichen Spitzenwinkeln zu versehen, wobei der Spitzenwinkel des zentrischen Bereichs dem Öffnungswinkel des durch den zentrischen Bereich in Seitenansicht gebildeten Giebels entspricht. Ebenso entspricht der Spitzenwinkel, den die Außenbereiche miteinander bilden, einem Öffnungswinkel des Giebels, welchen die Außenbereiche in Seitenansicht miteinander definieren. Durch die unterschiedliche Ausbildung der Spitzenwinkel erfolgt ebenfalls eine Anpassung des Werkzeugs an die unterschiedlichen Beanspruchungen im zentrischen Bereich und in den Außenbereichen. Eine flachere Stellung der Schneidkanten der Außenbereiche führt zu einer Verkürzung der Schneidkanten und damit über einen erhöhten Druck auf die Schneidkante - der vorhandene Druck verteilt sich nun auf eine kürze Schneidkante - zu einer erhöhten Abtragsleistung. Darüber hinaus bewirkt ein Spitzenwinkel < 180° im Außenbereich eine zusätzliche Unterstützung der Zentrierung des Bohrwerkzeugs. Im zentrischen Bereich führt eine steilere Ausrichtung der Schneidkanten zur Ausbildung einer spitzeren Pyramide bzw. zur steileren Stellung der Seitenflächen der Pyramide und somit zu einem leichteren Eindringen des zentrischen Bereichs in das Werkstück bei schlagendem bzw. hämmerndem Einsatz. Insbesondere wir eine verbesserte Zentrierung des Werkzeugs erreicht.

Erfindungsgemäß ist zwischen dem Spitzenwinkel des zentrischen Bereichs und dem Spitzenwinkel der Außenbereiche eine Differenz von etwa 15 bis 30 Grad vorgesehen, wobei auch ein konkaver und/oder konvexer oder durch einen Polygonzug angenäherter Verlauf der Schneiden bzw. der Schenkel der Spitzenwinkel vorgesehen ist.

Eine weitere vorteilhafte Ausbildung des Erfindungsgegenstandes sieht vor, die pyramidenförmige Spitze in einem oberen Bereich kuppelförmig auszubilden. Hierdurch ist es möglich, einem vom Zufall bestimmten Verschleiß der pyramidenförmigen Spitze gezielt durch für hohe Schlagbelastungen geeignete Formgebungen vorzubeugen. Insbesondere ist eine kugelförmige oder eiförmige Abrundung der Spitze vorgesehen.

Die Erfindung sieht weiterhin vor, die Fase mit einer konstanten Breite auszubilden. Hierdurch ist eine fertigungstechnisch einfache Herstellung der Fase beispielsweise durch Formgebung im Sinterverfahren oder durch spanabhebende Nachbearbeitung möglich. Durch eine radial nach außen zunehmende Breite der Fase ist es möglich, Werkzeuge herzustellen, welche insbesondere auch in den freien Endbereichen der Schneiden hohe Schlagbelastungen verkraften können. Eine radial nach außen abnehmende Breite der Fase verhilft zu einem Werkzeug, das der radial nach außen abnehmenden Schlagbelastung entsprechend den zu bearbeitenden Werkstoffen, optimal angepasst ist. Die Spezialisierung der Schneide für den Schneidbetrieb nimmt demzufolge mit zunehmendem Abstand von der Längsmittelachse des Werkzeugs zu.

Es ist vorteilhaft, wenn die pyramidenförmige Spitze einen Wirkdurchmesser aufweist, welcher wenigstens einem 0,2-fachen Wirkdurchmesser D der Schneiplatte entspricht. Hierdurch ist auch bei kleineren Bohrerdurchmessern bzw. Schneidplattendurchmessern eine stabil ausgeführte Bohrerspitze vorhanden.

Eine fertigungstechnisch besonders einfache und kostengünstige Herstellung von Schneidplatten aus Hartmetall mit einer angefasten Schneidkante ist durch eine entsprechende Formgebung des Sinterwerkzeugs möglich. Eine derart hergestellte Schneidplatte benötigt hinsichtlich der Ausbildung der Fasen keine aufwendige mechanische Nachbearbeitung.

Gemäß einer Ausführungsvariante sieht die Erfindung auch die Beiordnung von Nebenschneiden zu einer Hauptschneide vor. Diese sind beispielsweise, wie in der DE 44 07 119 A1 beschrieben, in einem Bohrerkopf mit im wesentlichen quadratischem oder rechteckförmigem Querschnitt angeordnet, wobei der Hauptschneidkörper den Bohrerkopf diagonal durchsetzt und die Nebenschneiden in Draufsicht in einem stumpfen Winkel zu den Schneidflächen des Hauptschneidkörpers stehen. Die Nebenschneiden unterstützen die Hauptschneide insbesondere in den Außenbereichen, in denen das Schneiden und das Schlagen von großer Bedeutung sind. Zwischen der Hauptschneide und der Nebenschneide ist eine Spezialisierung möglich. Beispielsweise kann die Hauptschneide stärker auf die Schneidleistung optimiert sein und die Nebenschneide besser den Anforderungen hinsichtlich der Schlagleistung entsprechen. Hierbei sind jedoch Hauptschneide und Nebenschneide für beide Belastungsarten gut geeignet.

Weitere Einzelheiten und Vorteile der Erfindung ergeben sich aus der nachfolgenden Beschreibung von Ausführungsbeispielen der Erfindung, die anhand der Zeichnungen näher erläutert werden.

Es zeigen:
- Figur 1a: eine Seitenansicht einer Schneidplatte aus Hartmetall,
- Figur 1b: eine Draufsicht auf die in Figur 1a dargestellte Schneidplatte,
- Figur 1c: eine Ansicht der in Figur 1b dargestellten Schneidplatte aus der Pfeilrichtung I,
- Figur 2a: eine Seitenansicht einer zweiten Schneidplatte aus Hartmetall,
- Figur 2b: eine Draufsicht auf die in Figur 2a dargestellte Schneidplatte,
- Figur 2c: eine Ansicht der in Figur 2b dargestellten Schneidplatte aus der Pfeilrichtung II,
- Figur 3a: eine Seitenansicht einer dritten Schneidplatte aus Hartmetall,
- Figur 3b: eine Draufsicht auf die in Figur 3a dargestellte Schneidplatte,
- Figur 3c: eine Ansicht der in Figur 3b dargestellten Schneidplatte aus der Pfeilrichtung III,
- Figur 4a: eine Seitenansicht einer vierten Schneidplatte aus Hartmetall,
- Figur 4b: eine Draufsicht auf die in Figur 4a dargestellte Schneidplatte,
- Figur 4c: eine Seitenansicht der in Figur 4b dargestellten Schneidplatte aus der Pfeilrichtung IV,
- Figur 4d: eine Detailansicht des in Figur 4c mit A bezeichneten Details,
- Figur 5a: eine Seitenansicht einer fünften Schneidplatte aus Hartmetall,
- Figur 5b: eine Draufsicht auf die in Figur 5a dargestellte Scheidplatte,
- Figur 5c: eine Ansicht der in Figur 5b dargestellten Schneidplatte aus der Pfeilrichtung V,
- Figur 5d: eine Ansicht des in Figur 5c mit B bezeichneten Details,
- Figur 6a: eine Seitenansicht einer sechsten Schneidplatte aus Hartmetall,
- Figur 6b: eine Draufsicht auf die in Figur 6a dargestellte Schneidplatte,
- Figur 6c: eine Ansicht der in Figur 6b dargestellten Schneidplatte aus der Pfeilrichtung VI,
- Figur 6d: eine Ansicht des in Figur 6c mit C bezeichneten Details,
- Figur 7a: eine Seitenansicht eines Spitzenbereichs eines Hammerbohrers mit einer erfindungsgemäßen Schneidplatte,
- Figur 7b: eine Draufsicht auf den in Figur 7a dargestellten Hammerbohrer aus einer Pfeilrichtung VIIb,
- Figur 7c: eine um 90 Grad gedrehte Ansicht des in Figur 7a dargestellten Hammerbohrers,
- Figur 8a: eine Seitenansicht eines Spitzenbereichs eines Hammerbohrers mit einer Kreuzschneide,
- Figur 8b: eine um etwa 90° gedrehte Darstellung des in Figur 8a dargestellten Hammerbohrers und
- Figur 8c: eine Draufsicht aus der Pfeilrichtung VIIIc auf den in Figur 8b dargestellten Hammerbohrer.

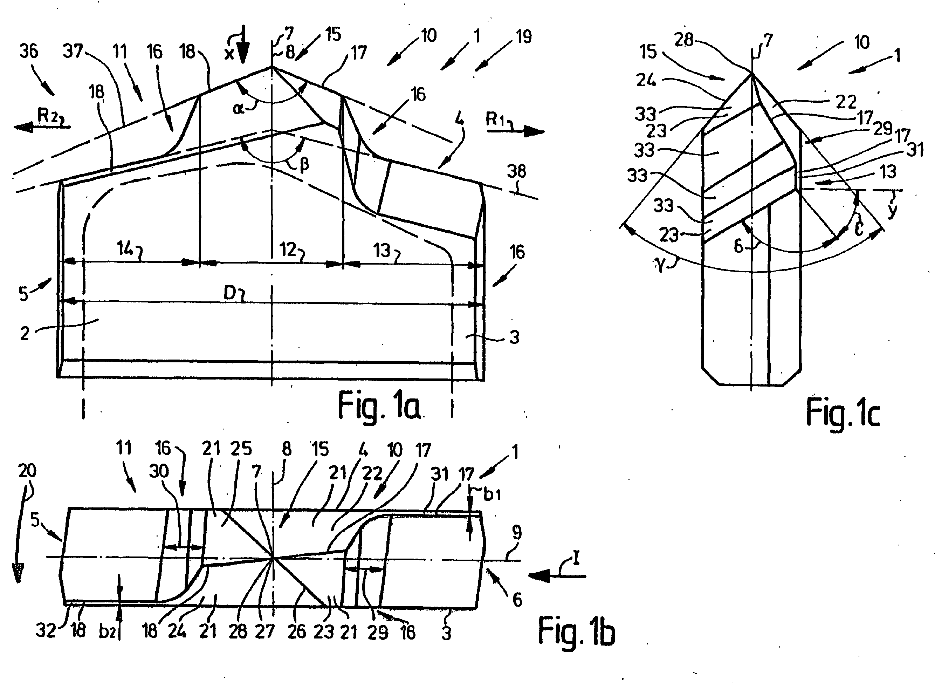

Das erfindungsgemäße Bohrwerkzeug wird im Weiteren als "Werkzeug" bezeichnet. Die in den Figuren 1a bis 6d dargestellten Schneidplatten aus Hartmetall sind auch als ausschnittsweise Detaildarstellung eines einstückigen Werkzeugs zu verstehen.

In Figur 1a ist eine Schneidplatte 1 in Seitenansicht dargestellt. Die Schneidplatte 1 weist einen Wirkdurchmesser D auf und bildet eingesetzt in einen mit gestrichelten Linien angedeuteten Bohrerschaft 2 mit diesem ein vollständiges Bohrwerkzeug 36. Hierbei ist die Schneidplatte 1 Bohrerschaft 2 aufgenommen bzw. gehalten. Der Bohrerschaft 2 umgreift parallel Seitenflächen 3, 4 und lässt weitere Seitenflächen 5, 6 der Schneidplatte 1 in radialer Richtung frei über den Bohrerschaft 2 hinausstehen. Die Schneidplatte 1 ist von einer Werkzeuglängsmittelachse 7 durchlaufen, in der sich eine Quermittelebene 8 und eine Längsmittelebene 9 rechtwinklig schneiden (siehe auch Figur 1b). Ausgehend von der Werkzeuglängsmittelachse 7 verlaufen in radialen Richtungen R₁, R₂ Schneiden 10, 11. Die Schneidplatte 1 ist in radialer Richtung in einen zentrischen Bereich 12 und zwei außerhalb des zentrischen Bereichs 12 liegende Außenbereiche 13, 14 unterteilt. Im zentrischen Bereich 12 weist die Schneidplatte 1 eine pyramidenförmige Spitze 15 auf, welche über Abstufungen 16 in die Außenbereiche 13, 14 übergeht. Schneidkanten 17, 18 der Schneiden 10, 11 verlaufen ausgehend von der Längsmittelachse 7 in radialen Richtungen durch den zentrischen Bereich 12 in die Außenbereiche 13, 14. Die Schneiden 10, 11 bzw. Schneidkanten 17, 18 bilden im zentrischen Bereich 12 einen Spitzenwinkel α = 135°. In den Außenbereichen 13, 14 bilden gedachte Verlängerungen der Schneiden 10, 11 bzw. Schneidkanten 17, 18 einen Spitzenwinkel von β = 150°. In der Seitenansicht weist die Schneidplatte 1 die Form eines Giebels 19 auf, wobei die Giebelseite durch die Seitenfläche 3 gebildet ist und die Spitzenwinkel α, β die Neigungen abgestufter Dachflächen angeben. Im zentrischen Bereich 12 definieren die Schneidkanten 17, 18 eine Kegelmantelfläche 37 (durch gestrichelte Linien dargestellt), welche zu einer durch den Verlauf der Schneidkanten 17, 18 im Außenbereich 13, 14 definierten Kegelmantelfläche 38 (durch gestrichelte Linien angedeutet) beabstandet ist. Das heißt, im Außenbereich 13, 14 findet keine gegenseitige Berührung oder kein gegenseitiger Schnitt der Kegelmantelflächen 37, 38 statt. Hierdurch wird die Zentrierwirkung des zentrischen Bereichs 12 verbessert, weil die im Außenbereich 13, 14 liegenden Außenkanten erst später in Eingriff kommen.

In Figur 1b ist eine Draufsicht auf die in Figur 1a dargestellte Schneidplatte 1 abgebildet. Durch einen Pfeil 20 ist die Drehrichtung der Schneidplatte 1 um die Werkzeuglängsmittelachse 7 beim Bohren angegeben. Die pyramidenförmige Spitze 15 ist durch vier Anschliffflächen 21 gebildet. Bei diesen handelt es sich um eine Spanfläche 22 und eine Freifläche 23, welche der Schneide 10 zugeordnet sind, und um eine Spanfläche 24 und eine Freifläche 25, welche der Schneide 11 zugeordnet sind. Die Spanfläche 22 und die Freifläche 23 der Schneide 10 sind voneinander durch die Schneidkante 17 abgegrenzt. Eine Abgrenzung der Spanfläche 24 von der Freifläche 25 der Schneide 11 erfolgt durch die Schneidkante 18. Die Schneiden 10, 11 treffen an einer Übergangskante 26 aufeinander. Im Schnittpunkt 27 der Übergangskante 26 mit den Schneidkanten 17, 18 liegt die Spitze 28 des pyramidenförmigen Körpers 15. Die Freiflächen 23, 25 verlaufen aus dem zentrischen Bereich 12 (siehe Figur 1a) über die Abstufungen 16 in die und durch die Außenbereiche 13, 14. Die Spanflächen 22, 24 laufen in Übergangsbereichen 29, 30 aus und gehen in Schneidkanten 17, 18 über, welche durch Fasen 31, 32 gebildet sind. Die Außenbereiche 13, 14 weisen somit keine Spanflächen auf. In den Außenbereichen 13, 14 sind die Schneidkanten 17, 18 als flache bzw. abgerundete Fasen 31, 32 ausgeformt. Im Folgenden ist unter dem Begriff Fase immer eine flache bzw. eben verlaufende und/oder abgerundet bzw. gewölbt verlaufende Fase zu verstehen. Die Fasen 31, 32 weisen in der Draufsicht, d.h. in der senkrechten Projektion aus einer Pfeilrichtung x (siehe Figur 1a), Breiten b₁, b₂ auf. Diese liegen für Schneidplatten 1 mit einem Durchmesser D bis 25 mm in einem Bereich von bis zu 0,5 mm, vorzugsweise etwa 0,1 mm bis 0,5 mm. Für Schneidplatten 1 mit einem Durchmesser D von 25 mm bis 50 mm sind Breiten b₁, b₂ der Fasen 31, 32 bis zu 1 mm, vorzugsweise 0,5 mm bis 1 mm, vorgesehen. Schneidplatten 1 mit einem Durchmesser D, der größer ist als 50 mm, weisen Fasen 31, 32 mit Breiten b₁, b₂ bis zu 2 mm, vorzugsweise 1 mm bis 2 mm, auf. Im Wesentlichen weisen die Fasen in den Außenbereichen 13, 14 Breiten b₁, b₂ gleichbleibende Breiten auf. In den Übergangsbereichen 29, 30 erfolgt der Übergang der Fasen 31, 32 in die Spanflächen 22, 24. In Bezug auf den in Figur 1a beschriebenen Giebel 19, der durch die Seitenfläche 3 gebildet ist, sind die Anschliffflächen 21 als Dachflächen zu bezeichnen.

In der Figur 1c ist eine Seitenansicht der in Figur 1b dargestellten Schneidplatte 1 aus der Pfeilrichtung I abgebildet. Neben dem in Figur 1a dargestellten Spitzenwinkel α ist die pyramidenförmige Spitze 15 durch einen Spitzenwinkel γ definiert, der in der Quermittelebene 8 (siehe Figur 1b) liegt. Der Spitzenwinkel γ beträgt etwa 80° und gibt den Winkel an, welchen die Spanflächen 22, 24 einschließen. Weiterhin ist in der Figur 1c die Lage der Fase 31 bzw. Schneidkante 17 zur Freifläche 23 dargestellt. Die Freifläche 23 setzt sich aus vier Teilflächen 33 zusammen. Bei der in den Figuren 1a bis 1c dargestellten Schneidplatte 1 schließen die Freifläche 23 bzw. die im Außenbereich 13 liegende Teilfläche 33 der Freifläche 23 und die Fase 31 einen Winkel δ von etwa 95° ein. Anders ausgedrückt verläuft die Fase 31 geneigt zu einer Waagrechten y mit einem Neigungswinkel ε von etwa 50°. Im Übergangsbereich 29 geht die Fase 31 in die Spanfläche 22 der Schneide 10 über. Die Fase 31 im Außenbereich 13 ist nicht im Sinne einer senkrecht zur Werkzeuglängsmittelachse 7 stehenden Abflachung ausgebildet, sondern wirkt als leicht entschärfte und damit stabilisierte schräge Schneidkante 17. Die in der Figur 1c zur Schneide 10 gemachten Ausführen gelten analog auch für die Schneide 11, da die Schneiden 10, 11 punktsymmetrisch zur Werkzeuglängsmittelachse 7 angeordnet sind.

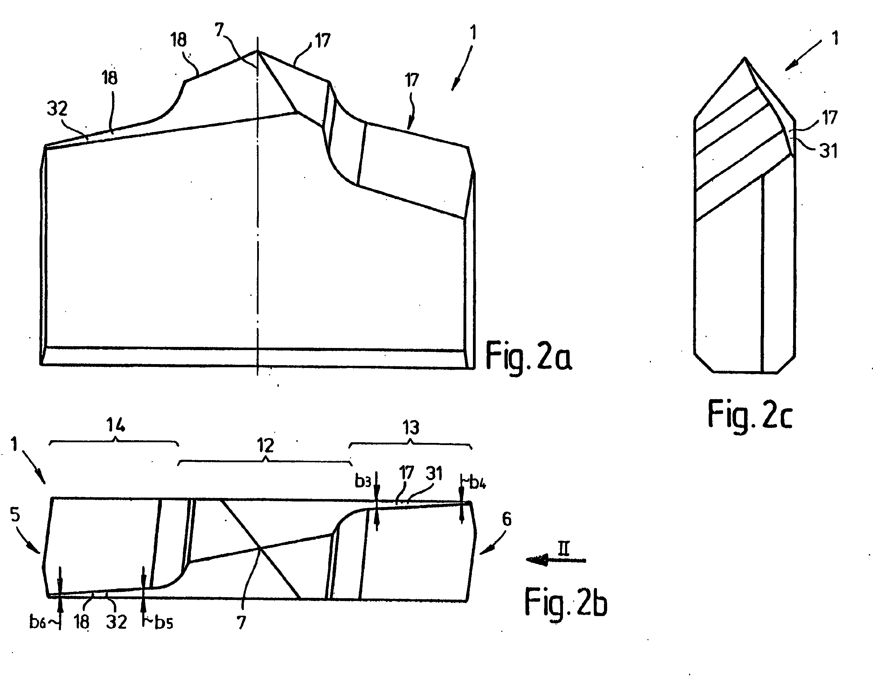

In den Figuren 2a bis 2c ist eine zweite Schneidplatte 1 dargestellt, die im Unterschied zu der in den Figuren 1a bis 1c dargestellten Schneidplatte in Außenbereichen 13, 14 als Fasen 31, 32 ausgebildete Schneidkanten 17, 18 besitzt, welche radial nach außen zu Seitenflächen 5, 6 hin schmäler werden. Hierbei nehmen die Fasen 31, 32 in der senkrechten Projektion, in Richtung einer Werkzeuglängsmittelache 7 betrachtet, etwa von Maßen b₃, b₅ auf Maße b₄, b₆ ab. Für das Verhältnis der Maße gilt etwa b₃ ≈ 2 x b₄ bzw. b₅ ≈ 2 x b₆.

In den Figuren 3a bis 3c ist eine dritte Schneidplatte 1 dargestellt, die im Unterschied zu der in den Figuren 1a bis 1c dargestellten Schneidplatte in Außenbereichen 13, 14 als Fasen 31, 32 ausgebildete Schneidkanten 17, 18 besitzt, welche radial nach außen zu Seitenflächen 5, 6 hin breiter werden. Hierbei nehmen die Fasen 31, 32 in der senkrechten Projektion, in Richtung einer Werkzeuglängsmittelache 7 betrachtet, etwa von Maßen b₇, b₉ auf Maße b₈, b₁₀ zu. Für das Verhältnis der Maße gilt etwa b₈ ≈ 2 x b₇ bzw. b₁₀ ≈ 2 x b₉. Die in Figur 3a dargestellte Schneidplatte 1 besitzt einen Wirkdurchmesser D, mit welchem diese auf ein zu bearbeitendes Werkstück in Wirkrichtung x' einwirkt. Ein zentrischer Bereich 12 der Schneidplatte 1 wirkt mit einer pyramidenförmigen Spitze 15 auf das Werkstück ein und weist hierbei einen Wirkdurchmesser W₁₂ auf. Die Außenbereiche 13, 14 wirken mit Wirkabschnitten W₁₃, W₁₄ auf das Werkstück ein. Der Wirkdurchmesser W₁₂ und die Wirkabschnitten W₁₃, W₁₄ besitzen etwa die gleichen Abmessungen und es gilt W₁₂ ≈ W₁₃ ≈ W₁₄ ≈ 1/3 x D. Der Wirkdurchmesser W₁₂ sollte wenigsten eine Größe von etwa 0,2 x D aufweisen. Die Schneidplatte 1 besitzt eine Dicke E, durch welche der Abstand von Seitenflächen 3, 4 bestimmt ist. Diese Dicke E entspricht etwa 0,2 x D.

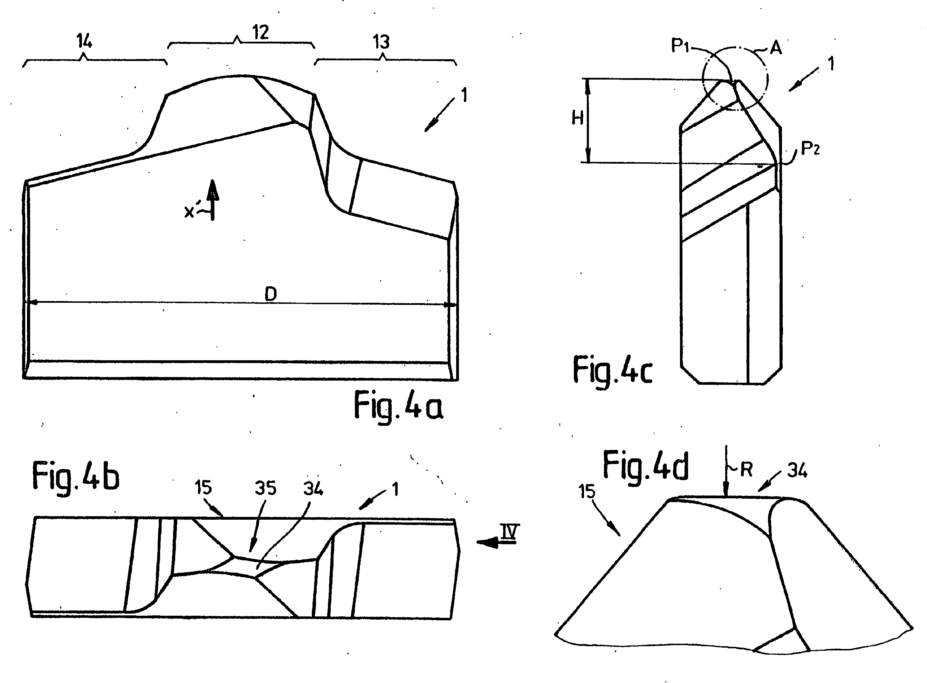

In den Figuren 4a bis 4d ist eine vierte Schneidplatte 1 dargestellt, die im Unterschied zu der in den Figuren 1a bis 1c dargestellten Schneidplatte eine pyramidenförmige Spitze 15 mit einer abgerundeten Spitze 34 aufweist. Die abgerundete Spitze 34 ist in der Figur 4d in vergrößerter Ansicht dargestellt und weist einen Rundungsradius R auf, der etwa einem Wirkdurchmesser D der Schneidplatte 1 entspricht. In der Draufsicht zeigt die abgerundete Spitze 34 in etwa die Kontur einer Raute 35. In Wirkrichtung x' ist der oberste Punkt P₁ eines zentrischen Bereichs 12 bzw. der pyramidenförmigen Spitze 15 um ein Maß H gegenüber einem obersten Punkt P₂ eines Außenbereichs 13 zurückversetzt. In Bezug auf einen Wirkdurchmesser D der Schneidplatte 1 entspricht der Versatz H etwa 0,15 x D.

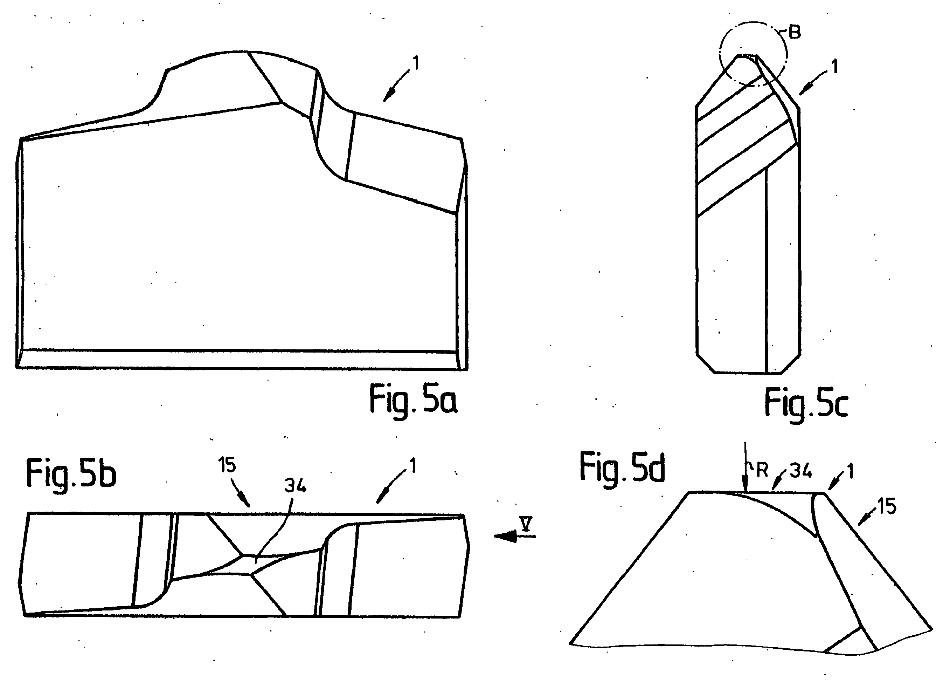

In den Figuren 5a bis 5d ist eine fünfte Schneidplatte 1 dargestellt, die im Unterschied zu der in den Figuren 2a bis 2c dargestellten Schneidplatte eine pyramidenförmige Spitze 15 mit einer abgerundeten Spitze 34 aufweist. Die abgerundete Spitze 34 ist in der Figur 5d in vergrößerter Ansicht dargestellt und weist einen Rundungsradius R auf, der etwa einem Wirkdurchmesser D der Schneidplatte 1 entspricht.

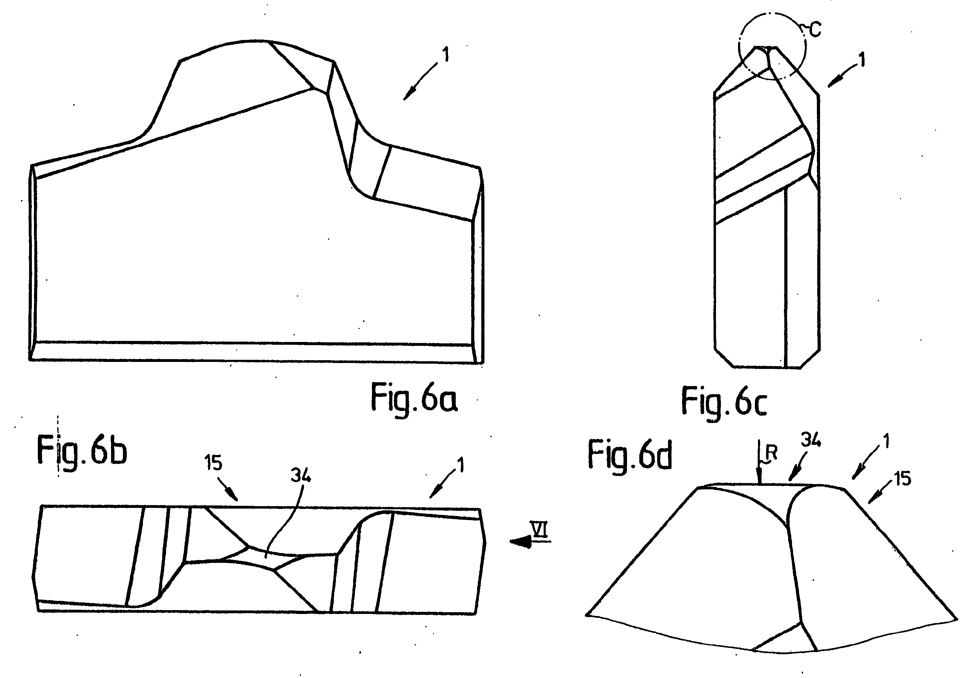

In den Figuren 6a bis 6d ist eine sechste Schneidplatte 1 dargestellt, die im Unterschied zu der in den Figuren 3a bis 3c dargestellten Schneidplatte eine pyramidenförmige Spitze 15 mit einer abgerundeten Spitze 34 aufweist. Die abgerundete Spitze 34 ist in der Figur 6d in vergrößerter Ansicht dargestellt und weist einen Rundungsradius R auf, der etwa einem Wirkdurchmesser D der Schneidplatte 1 entspricht.

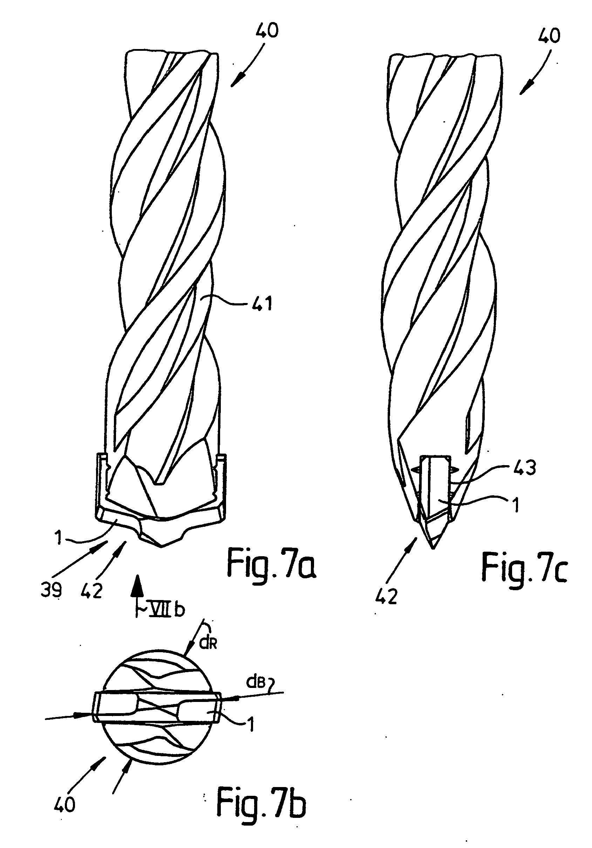

In Figur 7a ist ein Spitzenbereich 39 eines Hammerbohrers 40 dargestellt. Der Spitzenbereich 39 zeigt eine Förderwendel 41, welche in einem Kopfbereich 42 einen Schlitz 43 (siehe Figur 7c) aufweist, in welchen eine Schneidplatte 1 aufgenommen ist. Die Schneidplatte 1 entspricht in ihren wesentlichen Merkmalen etwa der in den Figuren 1a bis 1c dargestellten Schneidplatte. Hinsichtlich der Ausgestaltung der Förderwendel wird auf die DE 197 53 731 A1 verwiesen, in welcher eine derartige Förderwendel beschrieben ist.

In Figur 7b ist eine Draufsicht auf den in Figur 7a dargestellten Hammerbohrer 40 aus einer Pfeilrichtung VIIb abgebildet. Die Schneidplatte 1 steht mit einem Bohrerdurchmesser d_{B} über einen Rückendurchmesser d_{R} der Förderwendel 41 über.

Figur 7c zeigt die in Figur 7a dargestellte Teilansicht des Hammerbohrers 40 aus einer um 90 Grad gedrehten Perspektive.

Die Schneidplatte 1 ist tief in den Schlitz 43 eingebettet, welcher den Kopfbereich 42 durchläuft.

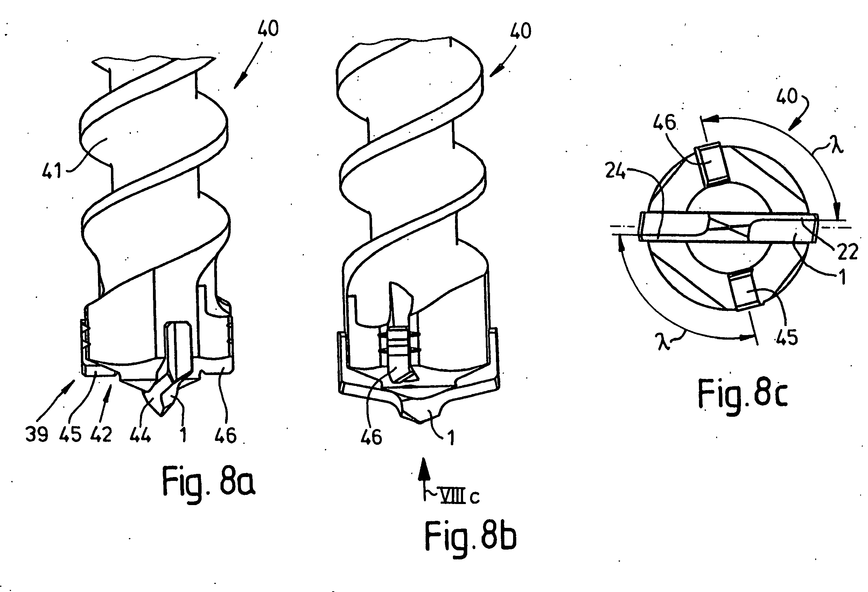

In Figur 8a ist ein Spitzenbereich 39 eines weiteren Hammerbohrers 40 abgebildet. Eine Förderwendel 41 geht in einen Kopfbereich 42 über, welcher eine Kreuzschneide 44 aufweist. Die Kreuzschneide 44 ist aus einer Schneidplatte 1 und zwei Hilfsschneidplatten 45, 46 gebildet. Die Schneidplatte 1 entspricht im Wesentlichen der in den Figuren 1a bis 1c gezeigten Schneidplatte.

In der Figur 8b ist der in der Figur 8a dargestellte Hammerbohrer 40 um etwa 90 Grad gedreht abgebildet. In dieser Ansicht sind nur die Hilfsschneidplatte 46 und Schneidplatte 1 sichtbar.

Die Figur 8c zeigt eine Draufsicht auf den in der Figur 8b dargestellten Hammerbohrer 40 aus einer Pfeilrichtung VIIIc in dieser Ansicht ist die x-förmige Anordnung der Schneidelemente 1, 45, 46 zueinander erkennbar.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche, insbesondere ist es auch vorgesehen, die Schneidplatte in Draufsicht kreuzförmig auszubilden. Als Abwandlungen der kreuzförmigen Schneidplatte sind erfindungsgemäß auch drei- oder mehrflügelige Schneidplatten vorgesehen, wobei die kreuzförmige Schneidplatte einer vierflügligen Schneidplatte entspricht. Weiterhin lassen sich die erfindungsgemäßen Merkmale problemlos auch auf einen Vollhartmetallkopf übertragen.

### Bezugszeichenliste:

- 1: Schneidplatte (Hartmetallschneidplatte)
- 2: Bohrerschaft
- 3: Seitenfläche
- 4: Seitenfläche
- 5: Seitenfläche
- 6: Seitenfläche
- 7: Werkzeuglängsmittelachse
- 8: Quermittelebene
- 9: Längsmittelebene f
- 10: Schneide
- 11: Schneide
- 12: zentrischer Bereich
- 13: Außenbereich
- 14: Außenbereich
- 15: pyramidenförmige Spitze
- 16: Abstufung
- 17: Schneidkante von 10
- 18: Schneidkante von 11
- 19: Giebel
- 20: Pfeil
- 21: Anschifffläche
- 22: Spanfläche von 10
- 23: Freifläche von 10
- 24: Spanfläche von 11
- 25: Freifläche von 11
- 26: Übergangskante
- 27: Schnittpunkt
- 28: Spitze von 15
- 29: Übergangsbereich
- 30: Übergangsbereich
- 31: Fase
- 32: Fase
- 33: Teilfläche von 23
- 34: abgerundete Spitze von 15
- 35: Raute
- 36: Bohrwerkzeug
- 37: Kegelmantelfläche
- 38: Kegelmantelfläche
- 39: Spitzenbereich
- 40: Hammerbohrer
- 41: Förderwendel
- 42: Kopfbereich
- 43: Schlitz
- 44: Kreuzschneide
- 45: Hilfsschneidplatte
- 46: Hilfsschneidplatte

## Patentansprüche

1. Bohrwerkzeug, insbesondere zur Verarbeitung von Beton, Gestein, Mauerwerk und dergleichen Materialien, mit einem Ein- oder Mehrschneiden-Werkzeugkopf mit wenigstens einem Schneidkörper (1), der einen dachförmig ausgebildeten, Spanflächen (22, 24) und Freiflächen (23, 25) aufweisenden, zentrischen Bereich (12) umfasst, der seitlich von zwei in wirkrichtung des Bohrers zurückversetzten Außenbereichen (13, 14) begrenzt ist, **dadurch gekennzeichnet, dass** die Anschliffflächen (21) des zentrischen Bereichs (12) eine pyramidenförmige Spitze (15) unter Vermeidung der Bildung einer Querschneide ausbilden, wobei die Schneidkanten (17, 18) im Außenbereich (13, 14) durch ebene oder abgerundete Fasen (31, 32) gebildet sind und wobei die Fase (31, 32), in axialer Richtung (x') projiziert, bei Bohrwerkzeugen (36) mit einem Wirkdurchmesser D von bis zu 25 mm eine Breite (b₁ - b₁₀) von bis zu 0, 5 mm, vorzugsweise von 0,1 bis 0,5 mm, aufweist.

2. Bohrwerkzeug, insbesondere zur Verarbeitung von Beton, Gestein, Mauerwerk und dergleichen Materialien, mit einem Ein- oder Mehrschneiden-Werkzeugkopf mit wenigstens einem Schneidkörper (1), der einen dachförmig ausgebildeten, Spanflächen (22, 24) und Freiflächen (23, 25) aufweisenden, zentrischen Bereich (12) umfasst, der seitlich von zwei in Wirkrichtung des Bohrers zurückversetzten Außenbereichen (13, 14) begrenzt ist, **dadurch gekennzeichnet, dass** die Anschliffflächen (21) des zentrischen Bereichs (12) eine pyramidenförmige Spitze (15) unter Vermeidung der Bildung einer Querschneide ausbilden, wobei die Schneidkanten (17, 18) im Außenbereich (13, 14) durch ebene oder abgerundete Fasen (31, 32) gebildet sind und wobei die Fase (31, 32), in axialer Richtung (x') projiziert, bei Bohrwerkzeugen (36) mit einem Wirkdurchmesser D von über 25 mm bis 50 mm eine Breite von bis zu 1 mm, vorzugsweise von 0,5 mm bis 1 mm, aufweist.

3. Bohrwerkzeug, insbesondere zur Verarbeitung von Beton, Gestein, Mauerwerk und dergleichen Materialien, mit einem Ein- oder Mehrschneiden-Werkzeugkopf mit wenigstens einem Schneidkörper (1), der einen dachförmig ausgebildeten, Spanflächen (22, 24) und Freiflächen (23, 25) aufweisenden, zentrischen Bereich (12) umfasst, der seitlich von zwei in wirkrichtung des Bohrers zurückversetzten Außenbereichen (13, 14) begrenzt ist, **dadurch gekennzeichnet, dass** die Anschliffflächen (21) des zentrischen Bereichs (12) eine pyramidenförmige Spitze (15) unter Vermeidung der Bildung einer Querschneide ausbilden, wobei die Schneidkanten (17, 18) im Außenbereich (13, 14) durch ebene oder abgerundete Fasen (31, 32) gebildet sind und wobei die Fase (31, 32), in axialer Richtung (x') projiziert, bei Bohrwerkzeugen (36) mit einem Wirkdurchmesser D > 50 mm eine Breite (b₁ bis b₁₀) von bis zu 2 mm, vorzugsweise von 1 mm bis 2 mm, aufweist.

4. Bohrwerkzeug nach einem der vorhergehenden Ansprüche, **dadurch gekennzeichnet, dass** die in den Außenbereichen (13, 14) angeordneten Schneiden (10, 11) Fasen (31, 32) aufweisen, welche im Querschnitt eben und/oder konkav und/oder konvex und/oder als Polygonzug ausgebildet sind.

5. Bohrwerkzeug nach einem der vorhergehenden Ansprüche, **dadurch gekennzeichnet, dass** der zentrische Bereich (12) einen Spitzenwinkel (α) aufweist der kleiner ist als ein Spitzenwinkel (β), den die Außenbereiche (13, 14) miteinander bilden.

6. Bohrwerkzeug nach einem der vorhergehenden Ansprüche, **dadurch gekennzeichnet, dass** der zentrische Bereich (12) einen Spitzenwinkel (α) von etwa 135° und die Außenbereiche (13, 14) einen Spitzenwinkel (β) von etwa 155° aufweisen.

7. Bohrwerkzeug nach einem der vorhergehenden Ansprüche, **dadurch gekennzeichnet, dass** die pyramidenförmige Spitze (15) eine abgerundete Spitze (34) aufweist, wobei die Spitze (34) vorzugsweise kugelförmig oder eiförmig abgerundet ist.

8. Bohrwerkzeug nach einem der vorhergehenden Ansprüche, **dadurch gekennzeichnet, dass** die Fase (31, 32) eine konstante Breite (b₁, b₂) aufweist.

9. Bohrwerkzeug nach einem der vorhergehenden Ansprüche, **dadurch gekennzeichnet, dass** die Fase (31, 32) eine radial nach außen (R₁, R₂) zunehmende oder abnehmende Breite (b₃ - b₁₀) aufweist.

10. Bohrwerkzeug nach einem der vorhergehenden Ansprüche, **dadurch gekennzeichnet, dass** die pyramidenförmige Spitze (15) einen Wirkdurchmesser (W₁₂) aufweist, welcher wenigstens einem 0,2-fachen Wirkdurchmesser D der Schneiplatte 1 entspricht und vorzugsweise dem 0,3-fachen Wirkdurchmesser D entspricht.

11. Bohrwerkzeug nach einem der vorhergehenden Ansprüche, **dadurch gekennzeichnet, dass** eine Kegelmantelfläche (37) durch die Schneidkanten (17, 18) des zentrischen Bereichs (12) gegenüber einer Kegelmantelfläche (38) durch die Schneidkanten (17, 18) des Außenbereichs (13, 14) in axialer Richtung (7) beabstandet ist.

12. Bohrwerkzeug, insbesondere zur Verarbeitung von Beton, Gestein, Mauerwerk und dergleichen Materialien, mit einem Mehrschneiden-Werkzeugkopf mit einem Hartmetall-Hauptschneidkörper (1) und mit wenigstens einem, in einem Winkel hierzu angeordneten Nebenschneidkörper (45, 46), nach einem der vorhergehenden Ansprüche 1 bis 11, **dadurch gekennzeichnet, dass** der Hauptschneidkörper (1) einen dachförmig ausgebildeten, Spanflächen (22, 24) und Freiflächen (23, 25) aufweisenden, zentrischen Bereich (12) umfasst, der seitlich von zwei in Wirkrichtung des Bohrers zurückversetzten Außenbereichen (13, 14) begrenzt ist und dass die Anschliffflächen (21) des zentrischen Bereichs (12) eine pyramidenförmige Spitze (15) unter Vermeidung der Bildung einer Querschneide ausbilden.

13. Bohrwerkzeug nach Anspruch 12, **dadurch gekennzeichnet, dass** die Schneidkanten (17, 18) im Außenbereich (13, 14) durch ebene oder abgerundete Fasen (31, 32) gebildet sind.

14. Bohrwerkzeug nach Anspruch 12 oder 13, **dadurch gekennzeichnet, dass** der Bohrerkopf einen im Wesentlichen quadratischen oder rechteckförmigen Querschnitt aufweist, der von dem Hauptschneidkörper (1) im Wesentlichen diagonal durchsetzt ist.

15. Bohrwerkzeug nach einem der Ansprüche 12 bis 14, **dadurch gekennzeichnet, dass** wenigstens ein und vorzugsweise zwei Nebenschneidkörper (45, 46) als Nebenschneidplatten vorgesehen sind, die in einem stumpfen Winkel λ zur Schneidfläche (22, 24; 31, 32) des Hauptschneidkörpers (1) angeordnet sind.

## Claims

1. Drilling tool, in particular for working concrete, rock, masonry or materials of that kind, having a single- or multiple-edged tool head with at least one cutting body (1) which comprises a central region (12) which has rake faces (22, 24) and flanks (23, 25) of roof-shaped design and which is defined laterally by two outer regions (13, 14) set back in the effective direction of the drill bit, **characterized in that** the ground surfaces (21) of the central region (12) form a pyramidal point (15) while avoiding the formation of a chisel edge, the cutting edges (17, 18) in the outer region (13, 14) being formed by planar or rounded-off bevels (31, 32), and the bevel (31, 32), projected in the axial direction (x'), having a width (b₁- b₁₀) of up to 0.5 mm, preferably from 0.1 to 0.5 mm, in drilling tools (36) having an effective diameter D of up to 25 mm.

2. Drilling tool, in particular for working concrete, rock, masonry or materials of that kind, having a single- or multiple-edged tool head with at least one cutting body (1) which comprises a central region (12) which has rake faces (22, 24) and flanks (23, 25) of roof-shaped design and which is defined laterally by two outer regions (13, 14) set back in the effective direction of the drill bit, **characterized in that** the ground surfaces (21) of the central region (12) form a pyramidal point (15) while avoiding the formation of a chisel edge, the cutting edges (17, 18) in the outer region (13, 14) being formed by planar or rounded-off bevels (31, 32), and the bevel (31, 32), projected in the axial direction (x'), having a width of up to 1 mm, preferably from 0.5 to 1 mm, in drilling tools (36) having an effective diameter D of over 25 mm up to 50 mm.

3. Drilling tool, in particular for working concrete, rock, masonry or materials of that kind, having a single- or multiple-edged tool head with at least one cutting body (1) which comprises a central region (12) which has rake faces (22, 24) and flanks (23, 25) of roof-shaped design and which is defined laterally by two outer regions (13, 14) set back in the effective direction of the drill bit, **characterized in that** the ground surfaces (21) of the central region (12) form a pyramidal point (15) while avoiding the formation of a chisel edge, the cutting edges (17, 18) in the outer region (13, 14) being formed by planar or rounded-off bevels (31, 32), and the bevel (31, 32), projected in the axial direction (x'), having a width (b₁ to b₁₀) of up to 2 mm, preferably from 1 mm to 2 mm, in drilling tools (36) having an effective diameter D > 50 mm.

4. Drilling tool according to one of the preceding claims, **characterized in that** the lips (10, 11) arranged in the outer regions (13, 14) have bevels (31, 32) which are designed in cross section to be planar and/or concave and/or convex and/or as a polyline.

5. Drilling tool according to one of the preceding claims, **characterized in that** the central region (12) has a point angle (α) which is smaller than a point angle (β) which the outer regions (13, 14) form with one another.

6. Drilling tool according to one of the preceding claims, **characterized in that** the central region (12) has a point angle (α) of about 135° and the outer regions (13, 14) have a point angle (β) of about 155°.

7. Drilling tool according to one of the preceding claims, **characterized in that** the pyramidal point (15) has a rounded-off point (34), the point (34) preferably being rounded off spherically or in an egg shape.

8. Drilling tool according to one of the preceding claims, **characterized in that** the bevel (31, 32) has a constant width (b₁, b₂).

9. Drilling tool according to one of the preceding claims, **characterized in that** the bevel (31, 32) has a width (b₃ - b₁₀) increasing or decreasing radially outwards (R₁, R₂).

10. Drilling tool according to one of the preceding claims, **characterized in that** the pyramidal point (15) has an effective diameter (W₁₂) which corresponds to at least 0.2 times the effective diameter D of the cutting tip 1 and preferably corresponds to 0.3 times the effective diameter D.

11. Drilling tool according to one of the preceding claims, **characterized in that** a lateral surface (37) of a cone through the cutting edges (17, 18) of the central region (12) is at a distance from a lateral surface (38) of a cone through the cutting edges (17, 18) of the outer region (13, 14) in the axial direction (7).

12. Drilling tool, in particular for working concrete, rock, masonry or materials of that kind, having a multiple-edged tool head with a carbide main cutting body (1) and at least one secondary cutting body (45, 46) arranged at an angle thereto, according to one of the preceding Claims 1 to 11, **characterized in that** the main cutting body (1) comprises a central region (12) which has rake faces (22, 24) and flanks (23, 25) of roof-shaped design and which is defined laterally by two outer regions (13, 14) set back in the effective direction of the drill bit, and **in that** the ground surfaces (21) of the central region (12) form a pyramidal point (15) while avoiding the formation of a chisel edge.

13. Drilling tool according to Claim 12, **characterized in that** the cutting edges (17, 18) in the outer region (13, 14) are formed by planar or rounded-off bevels (31, 32).

14. Drilling tool according to Claim 12 or 13, **characterized in that** the drill bit head has an essentially square or rectangular cross section, through which the main cutting body (1) passes essentially diagonally.

15. Drilling tool according to one of Claims 12 to 14, **characterized in that** at least one and preferably two secondary cutting bodies (45, 46) are provided as secondary cutting tips which are arranged at an obtuse angle λ to the cutting face (22, 24; 31, 32) of the main cutting body (1).

## Revendications

1. Foret, notamment pour le travail du béton, de la pierre, de la maçonnerie ou de matériaux analogues, comportant une tête d'outil à une ou plusieurs arêtes de coupe, comprenant au moins un organe de coupe (1) en forme de dièdre, ayant des surfaces actives (22, 24) et des surfaces dégagées (23, 25), une zone centrale (12) délimitée latéralement par deux zones extérieures (13, 14) en retrait dans la direction d'action du foret,
**caractérisé en ce que**
les surfaces meulées (21) de la zone centrale (12) ont une pointe (15) de forme pyramidale évitant la formation d'une arête de coupe transversale,
les arêtes de coupe (17, 18) dans la zone extérieure (13, 14) étant formées par des congés plans ou arrondis (31, 32) et
les congés (31, 32) sont projetés dans la direction axiale (x)
et pour des forets (36) ayant un diamètre actif (D) allant jusqu'à 25 mm, on a une largeur (b₁-b₁₀) allant jusqu'à 0,5 mm, de préférence entre 0,1 jusqu'à 0,5 mm.

2. Foret, notamment pour le travail du béton, de la pierre, de la maçonnerie ou de matériaux analogues, comportant une tête d'outil à une ou plusieurs arêtes de coupe, comprenant au moins un organe de coupe (1) en forme de dièdre, ayant des surfaces actives (22, 24) et des surfaces dégagées (23, 25), une zone centrale (12) délimitée latéralement par deux zones extérieures (13, 14) en retrait dans la direction d'action du foret,
**caractérisé en ce que**
les surfaces meulées (21) de la zone centrale (12) ont une pointe (15) de forme pyramidale évitant la formation d'une arête de coupe transversale,
les arêtes de coupe (17, 18) dans la zone extérieure (13, 14) étant formées par des congés plans ou arrondis (31, 32) et
les congés (31, 32) sont projetés dans la direction axiale (x) pour des forets (36) ayant un diamètre actif (D) supérieur à 25 mm jusqu'à 50 mm, on a une largeur allant jusqu'à 1 mm et de préférence 0,5 mm jusqu'à 1 mm.

3. Foret, notamment pour le travail du béton, de la pierre, de la maçonnerie ou de matériaux analogues, comportant une tête d'outil à une ou plusieurs arêtes de coupe, comprenant au moins un organe de coupe (1) en forme de dièdre, ayant des surfaces actives (22, 24) et des surfaces dégagées (23, 25), une zone centrale (12) délimitée latéralement par deux zones extérieures (13, 14) en retrait dans la direction d'action du foret,
**caractérisé en ce que**
les surfaces meulées (21) de la zone centrale (12) ont une pointe (15) de forme pyramidale évitant la formation d'une arête de coupe transversale,
les arêtes de coupe (17, 18) dans la zone extérieure (13, 14) étant formées par des congés plans ou arrondis (31, 32) et
les congés (31, 32) sont projetés dans la direction axiale (x) pour des forets (36) ayant un diamètre actif (D) supérieur à 50 mm, on a une largeur (b1 jusqu'à b 10) allant jusqu'à 2 mm et de préférence de 1 mm à 2 mm.

4. Foret selon l'une des revendications précédentes,
**caractérisé en ce que**
les arêtes de coupe (10, 11) des zones extérieures (13, 14) ont des congés (31, 32) qui, en section, sont plats et/ou concaves et/ou convexes et/ou formés avec un tracé polygonal.

5. Foret selon l'une des revendications précédentes,
**caractérisé en ce que**
la zone centrale (12) a un angle au sommet (α) inférieur à l'angle (β) que forment les zones extérieures (13, 14).

6. Foret selon l'une des revendications précédentes,
**caractérisé en ce que**
la zone centrale (12) a un angle au sommet (α) de l'ordre de 135° et les zones extérieures (13, 14) ont un angle au sommet (β) d'environ 155°.

7. Foret selon l'une des revendications précédentes,
**caractérisé en ce que**
la pointe (15) de forme pyramidale a un sommet arrondi (34), le sommet (34) étant arrondi de préférence avec une forme sphérique ou une forme ovoïde.

8. Foret selon l'une des revendications précédentes,
**caractérisé en ce que**
le congé (31, 32) a une largeur constante (b₁, b₂).

9. Foret selon l'une des revendications précédentes,
**caractérisé en ce que**
le congé (31, 32) a une largeur (b₃-b₁₀) augmentant ou diminuant radialement vers l'extérieur (R₁, R₂).

10. Foret selon l'une des revendications précédentes,
**caractérisé en ce que**
la pointe (15) de forme pyramidale a un diamètre actif (W 12) qui correspond au moins à 0,2 fois le diamètre actif (D) de la plaquette de coupe (1) et de préférence à 0,3 fois le diamètre actif (D).

11. Foret selon l'une des revendications précédentes,
**caractérisé en ce qu'**
une surface d'enveloppe conique (37) est écartée des arêtes de coupe (17, 18) de la zone centrale (12) par rapport à la surface enveloppe conique (38), par les arêtes de coupe (17, 18) de la zone extérieure (13, 14) dans la direction axiale (7).

12. Foret, notamment pour travailler du béton, de la pierre, de la maçonnerie ou des matériaux analogues ayant une tête à plusieurs couteaux, avec un corps de coupe principal (1) en métal dur et au moins un corps de coupe auxiliaire (45, 46) faisant un angle par rapport au corps principal, selon l'une des revendications 1 à 11,
**caractérisé en ce que**
le corps de coupe principal (1) a des surfaces actives (22, 24) en forme de dièdres et des surfaces libres (23, 25), dans une zone centrale (12) délimitée latéralement par deux zones extérieures (13, 14) en retrait par rapport à la direction d'action du foret et les surfaces meulées (21) de la zone centrale (12) ont un sommet pyramidal (15) qui évite la formation d'une arête transversale.

13. Foret selon la revendication 12,
**caractérisé en ce que**
les arêtes de coupe (17, 18) sont formées dans la zone extérieure (13, 14) par des congés plats ou arrondis (31, 32).

14. Foret selon la revendication 12 ou 13,
**caractérisé en ce que**
la tête de foret a une section pratiquement carrée ou rectangulaire traversée pratiquement en diagonale par l'organe de coupe principal (1).

15. Foret selon l'une des revendications 12 à 14,
**caractérisé par**
au moins un et de préférence deux organes de coupe auxiliaires (45, 46) comme plaquettes de coupe auxiliaires qui font un angle obtus (λ) par rapport à la surface de coupe (22, 24 ; 31, 32) de l'organe de coupe principal (1).
